# EUROPEAN PATENT APPLICATION

(11) **EP 4 682 928 A1**
(43) Date of publication of application: **21.01.2026**
(21) Application number: 25189331.9
(22) Date of filing: 14.07.2025
(51) Int. Cl.: H01H 47/32, H01H 9/54, H01H 71/12, H02H 3/33

(54) **TRIP DEVICE, SYSTEM, CHARGING STATION**

(30) Priority: 19.07.2024 DE 102024120635
(71) Applicant: Eaton Intelligent Power Limited, D04 Y0C2 Dublin 4 (IE)
(72) Inventor: DICHLER, Werner, 3922 Großschönau (AT)
(74) Representative: Epping - Hermann - Fischer

(57) **Abstract**

A trip device (1) for a circuit protection device (10) is specified, comprising
- at least one trip element (3) configured to activate the circuit protection device (10), and
- a delay circuit (2) connected to the trip element (3), wherein
- the delay circuit (2) comprises electrical components configured to delay an input.

Furthermore, a system (11) and a charging station are specified.

## Description

A trip device is provided. In addition, a system and a charging station are provided.

Generally, normal remote and/or shunt trip devices force a residual current device, RCD, or a miniature circuit breaker, MCB, to open in case a voltage is applied to corresponding terminals. The tripping happens immediately after the voltage is applied. However, this does not allow a usage within electrical vehicle charging infrastructures, exemplarily for an output monitoring to increase system safety. For example, if an output contactor does not switch off in cases where it should do, an auxiliary contact is typically used to remotely operate the RCD/MCB. Typically, a switching time of an output contactor auxiliary contact is not well defined with respect to the main contacts. This could lead to an unwanted operation of the RCD/MCB.

An object to be achieved is to provide a trip device which is particularly reliable. Furthermore, a system and a charging station comprising such a trip device are provided.

This object is achieved by the subject-matter of the independent claims. Advantageous embodiments, implementations and further developments are the subject-matter of the respective dependent claims.

The trip device for a circuit protection device is specified. The circuit protection device is particularly configured to interrupt a current flow when an abnormal condition occurs, i.e. in a failure event. This means that the circuit protection is configured to prevent damage to electrical circuits and to ensure safety and/or an integrity of the electrical circuits.

Exemplarily, the circuit protection device is connected to a contactor being part of an electrical circuit. In particular, the circuit protection device and the contactor are part of the same electrical circuit. For example, the circuit protection device is configured to interrupt the current flow of the electrical circuit, e.g. when the abnormal condition occurs, which is particularly characteristic of a fault operation of the contactor. For instance, the failure event is characteristic of the fault operation, which is in particular that the contactor does not switch off in cases where it should switch off.

According to at least one embodiment, the trip device comprises at least one trip element configured to activate the circuit protection device. In particular, the trip element is coupled with the circuit protection device. The trip element is configured to control a state of the circuit protection device, e.g. being in an active state or in a disabled stated. Exemplarily, in the active state, i.e. when the circuit protection device is activated, the current flow in the electrical circuit is interrupted by the circuit protection device. Exemplarily, in the disabled state, i.e. when the circuit protection device is not activated, the current flow in the electrical circuit is not interrupted by the circuit protection device. In particular, the at least one trip element is configured to activate the circuit protection device so that a current flow is interrupted in response to the abnormal conditions.

Exemplarily, the trip element is configured to receive an input, e.g. an input current or input voltage. For example, the trip element is configured to generate a trip signal dependent on the input. The trip element and the circuit protection device are particularly coupled such that the circuit protection device is activated dependent on the trip signal.

The input is, for example, characteristic of a condition of the electrical circuit, particularly the abnormal condition or a normal condition. If the input is characteristic of the abnormal condition, the trip signal is generated.

Exemplarily, the trip element has a response time of at most 10 ms, at most 5 ms, at most 1 ms or at most 0.5 ms. The response time is, for example, a duration between a first time characteristic for receiving an electrical signal by the trip element, being the input, characteristic of the abnormal condition, and to activate the circuit protection device.

According to at least one embodiment, the trip device comprises a delay circuit connected to the trip element. Exemplarily, if the abnormal condition occurs, the electrical signal characteristic of an electrical current is provided to the delay circuit. In particular, the delay circuit is configured to process the electrical signal to generate the input and to provide the input to the trip element. The delay circuit is configured to delay the electrical signal such that the input is provided to the trip element with a time delay.

In particular, if the abnormal condition occurs at a first time, the resulting electrical signal characteristic of the abnormal condition is delayed such that the input is provided to and/or received by the trip element at a second time. A difference between the first time and the second time corresponds to the time delay.

According to at least one embodiment of the trip device, the delay circuit comprises electrical components configured to delay the input. The electrical components comprise, for example, at least one active component and at least one passive component. Particularly, a passive component is represented by a component that does not have a control function, while an active component is represented by a component that does have a control function.

An idea of the trip device described herein is to provide the delay circuit to the trip element, such that a short-term abnormal condition, e.g. a wrong contact state, is no longer critical. Advantageously, the trip device is configured to activate the circuit control device only in the event that the abnormal condition is actually present, e.g. if the contactor actually does not get switched off due to malfunction of the contactor.

According to at least one embodiment of the trip device, the electrical components comprise a resistor and a capacitor represented by a resistor-capacitor, RC, circuit. Exemplarily, the resistor and the capacitor are connected in series. For example, the resistor is connected to a direct current, DC, output. Exemplarily, the capacitor is connected to a reference potential.

Exemplarily, the resistor and the capacitor form the RC circuit. In particular, when a DC voltage is applied, the capacitor charges or discharges through the resistor exponentially dependent on a delay constant. Exemplarily, the delay constant is characteristic of the time delay. The delay constant τ is dependent on the RC circuit. Exemplarily, the delay constant is characteristic of the formula τ = R·C, where R is the resistance of the resistor and C is the capacitance of the capacitor.

Advantageously, a charging of the trip element with the electrical signal is thus delayed, and particularly slowed down. In particular, the trip element is advantageously slowly charged due to the RC circuit. This means that such a trip device solely controls the trip element to open the circuit protection device in cases where the control signal is stable.

According to at least one embodiment of the trip device, the RC circuit is connected to a second output node of a bridge rectifier.

According to at least one embodiment of the trip device, a delay output is located between the resistor and the capacitor.

According to at least one embodiment of the trip device, the electrical components comprise a bridge rectifier. The bridge rectifier comprises in particular four diodes arranged in a bridge topology.

According to at least one embodiment of the trip device, the bridge rectifier is connected to the RC circuit. Exemplarily, the bridge rectifier comprises two input nodes and two output nodes. The input nodes are configured to be connected to an alternating current, AC, source. The bridge rectifier is particularly configured to convert an AC of the AC source to a DC. The output nodes are configured to be connected to the RC circuit. In particular, a first output node of the output nodes is connected to the reference potential, and a second output node of the output nodes is connected to the resistor and particularly the trip element.

According to at least one embodiment of the trip device, the electrical components comprise a Zener diode and a semiconductor transistor, connected in series to one another.

According to at least one embodiment of the trip device, the Zener diode is connected to the delay output.

According to at least one embodiment of the trip device, the trip element is arranged between the semiconductor transistor and the second output node being a high side output of the bridge rectifier.

According to at least one embodiment of the trip device, the Zener diode is connected to the RC circuit. The Zener diode comprises a cathode terminal and an anode terminal. The cathode terminal is connected to the RC circuit. Particularly, the cathode terminal is connected to the RC circuit between the resistor and the capacitor. The Zener diode is configured to be activated. To be activated means here that the Zener diode is configured to conduct the electrical signal from the RC circuit to the semiconductor transistor if the electrical signal characteristic of the electrical current is higher than a Zener voltage.

According to at least one embodiment of the trip device, the semiconductor transistor is connected to the trip element. The semiconductor transistor is formed, for example, of a Field Effect Transistor, FET. Exemplarily, the FET is an N-channel FET. The semiconductor transistor comprises, exemplarily, a gate terminal, a source terminal, and a drain terminal. Particularly, the gate terminal is configured to control a current flow between the source terminal and the drain terminal.

The anode terminal of the Zener diode is, for example, connected to the gate terminal of the semiconductor transistor. Exemplarily, the source terminal is connected to the reference potential and the drain terminal is connected to the trip element.

Exemplarily, if the electrical signal from the RC circuit is high enough, the Zener diode switches to pass the electrical signal and subsequently the Zener diode switches the semiconductor transistor.

Therefore, an accurate switching is advantageously provided due to the combination of the RC circuit with the Zener diode and the semiconductor transistor.

According to at least one embodiment of the trip device, the electrical components comprise a decoupling element for the semiconductor transistor. The decoupling element comprises, for example, a further resistor and a further capacitor, which are connected in parallel.

According to at least one embodiment of the trip device, the decoupling element is connected between the Zener diode and the semiconductor transistor. The decoupling element is connected to the Zener diode and the semiconductor transistor, particular between the Zener diode and the semiconductor transistor. Exemplarily, the decoupling element is configured to electrically decouple the semiconductor transistor.

Advantageously, by providing the decoupling element, the semiconductor transistor cannot be switched accidentally.

According to at least one embodiment of the trip device, the trip element comprises a solenoid. If the trip element comprises the solenoid, the circuit protection device is a miniature circuit breaker.

The solenoid is configured to receive the reference potential switched by the delay circuit. If the capacitor exceeds a predetermined voltage threshold, the miniature circuit breaker is activated to interrupt the electrical circuit.

According to at least one embodiment of the trip device, the trip element comprises a trip resistor. If the trip element comprises the trip resistor, the circuit protection device is a residual current device. The trip resistor is part of the trip device and simulates a residual current. The residual current device detects the failure current and switches off.

The trip resistor is exemplarily configured to simulate a residual current. The simulated residual current is in particular dependent on the reference potential switched by the delay circuit. The simulated residual current exceeds a predetermined current threshold, where the residual current device is activated to interrupt the electrical circuit.

Furthermore, a system is specified. The system can comprise or comprises the trip device described herein. Therefore, all features and embodiments disclosed in connection with the system are also disclosed in connection with the trip device and vice versa.

According to at least one embodiment, the system comprises the trip device described herein.

According to at least one embodiment, the system comprises the circuit protection device.

According to at least one embodiment of the system, the circuit protection device is a residual current device. If the circuit protection device is the residual current device, the trip element comprises or consists of the trip resistor.

According to at least one embodiment of the system, the circuit protection device is a miniature circuit breaker. If the circuit protection device is a miniature circuit breaker, the trip element comprises or consists of the solenoid.

Furthermore, a charging station is specified. The charging station can comprise or comprises the system described herein. Therefore, all features and embodiments disclosed in connection with the charging station are also disclosed in connection with the system and vice versa.

According to at least one embodiment, the charging station comprises the system described herein.

Exemplary embodiments of the trip device and the system are explained in more detail below with reference to the Figures.
Figure 1 shows a trip device according to an exemplary embodiment.
Figures 2 and 3 each shows a system with a trip device according to an exemplary embodiment.

Elements of the same structure or function are marked with the same reference signs throughout the Figures.

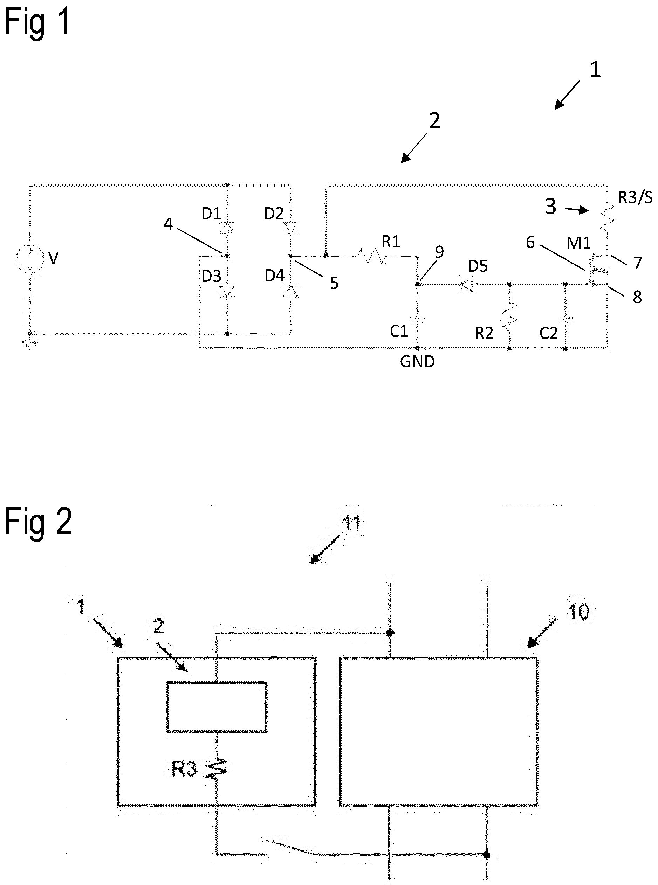

The trip device 1 according to Figure 1 comprises at least one trip element 3 and a delay circuit 2. The delay circuit 2 is connected to an AC source represented by an input of the delay circuit 2. If an abnormal condition occurs in an electrical circuit coupled to the AC source, an electrical signal is provided to the delay circuit 2, the electrical signal being characteristic of an AC electrical current.

The delay circuit 2 comprises a bridge rectifier. The electrical signal is characteristic of the AC electrical current provided to the bridge rectifier. The bridge rectifier comprises in particular four diodes, namely a first diode D1, a second diode D2, a third diode D3 and a fourth diode D4, arranged in a bridge topology. The first diode D1 and the third diode D3 are connected in parallel to the second diode D2 and the fourth diode D4. The first diode D1 and the third diode D3 are connected in series, and the second diode D2 and the fourth diode D4 are connected in series. Anode terminals of the first diode D1 and the third diode D3 face away from one another. Anode terminals of the second diode D2 and the fourth diode D4 face one another. A first output node 4 is located between the first diode D1 and the third diode D3, and a second output node 5 is located between the second diode D2 and the fourth diode D4.

The delay circuit 2 comprise a resistor R1 and a capacitor C1 being represented by an RC circuit. The resistor R1 and the capacitor C1 are connected in series. The resistor R1 is connected to the second output node 5, and the capacitor C1 is connected to a reference potential. The first output node 4 is connected to the reference potential.

Particularly, the bridge rectifier transforms the electrical signal characteristic of the AC electrical current to the electrical signal characteristic of a DC electrical current, which is provided to the RC circuit. The RC circuit is configured to delay the electrical signal characteristic of a DC electrical current - particularly dependent on a time constant.

Exemplarily, between the resistor R1 and the capacitor C1, a delay output 9 is located. The electrical signal characteristic of an output DC current increases, particularly slowly, at the delay output 9 dependent on the time constant.

Exemplarily, the resistor R1 has a resistance of at least 0.5 MΩ and/or at most 10 MΩ, e.g. approximately 1 MΩ. The capacitor C1 has a capacitance of at least 1 µF and/or at most 10 µF, e.g. approximately 4 µF.

The delay circuit 2 comprises a Zener diode D5 and a semiconductor transistor M1, connected in series to one another. The Zener diode D5 is connected to the RC circuit, particularly to the delay output 9. Particularly, a cathode terminal of the Zener diode D5 is connected to the RC circuit, particularly to the delay output 9, for receiving the electrical signal characteristic of the output DC current. The Zener diode D5 is connected with an anode terminal to a gate terminal 6 of the semiconductor transistor M1.

If the electrical signal characteristic of the output DC current is higher than a Zener voltage, the electrical signal is conducted through the Zener diode D5 for switching the semiconductor transistor M1, such that a current flow from a source terminal 8 to a drain terminal 7 of the semiconductor transistor M1 is allowed.

Exemplarily, the Zener voltage has a voltage of at least 10 V and/or at most 50 V, e.g. approximately 36 V.

The drain terminal 7 of the semiconductor transistor M1 is connected to a trip element 3 of the trip device 1. The source terminal 8 of the semiconductor transistor M1 is connected to the reference potential. The trip element 3 is arranged between the semiconductor transistor M1 and the second output node 5, which is in particular a high side output.

Thus, if the Zener diode D5 is switched on, the electrical signal is provided to the trip element 3 switched by the semiconductor transistor M1. If the capacitor C1 voltage exceeds a predetermined voltage threshold, the trip element 3 is configured to activate a circuit protection device 10 coupled to the trip element 3.

The delay circuit 2 comprises a decoupling element for the semiconductor transistor M1, said decoupling element being connected between the Zener diode D5 and the semiconductor transistor M1. The decoupling element comprises a further resistor R2 and a further capacitor C2, being connected in parallel to one another. The further resistor R2 and the further capacitor C2 are connected between the Zener diode D5 and the semiconductor transistor M1 as well as to the reference potential line.

Exemplarily, the further resistor R2 has a resistance of at least 10 kΩ and/or at most 1 MΩ, e.g. approximately 100 kΩ. The further capacitor C2 has a capacitance of at least 1 nF and/or at most 50 nF, e.g. approximately 10 nF.

In this embodiment, the trip element 3 comprises a trip resistor R3. The trip resistor R3 has a resistance of at least 0.1 kΩ and/or at most 40 kΩ, e.g. approximately 1 kΩ.

Alternatively, the trip element 3 comprises a solenoid S.

The trip resistor R3 is configured to simulate a residual current dependent on the semiconductor switch, particularly received from the drain terminal 7 controlled by the delay circuit. The simulated residual current exceeds the predetermined current threshold, the circuit protection device 10 being in this embodiment a residual current device is activated to interrupt the electrical circuit.

The system 11 according to Figure 2 comprises the trip device 1 according to Figure 1 and a circuit protection device 10. In particular, the circuit protection device 10 according to Figure 2 is a residual current device, wherein the trip element 3 is the trip resistor R3.

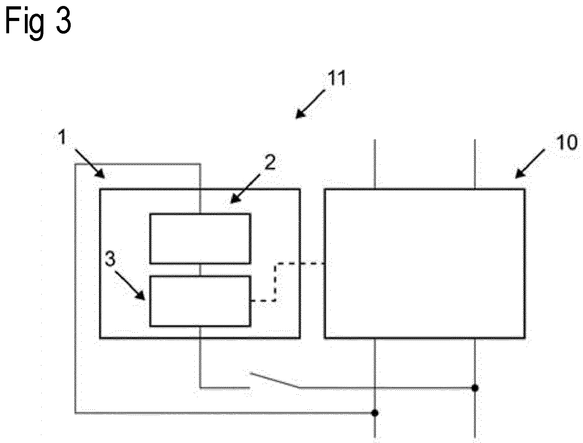

The system 11 according to Figure 3 comprises the trip device 1 according to Figure 1 and a circuit protection device 10. In particular, the circuit protection device 10 according to Figure 3 is a miniature circuit breaker, wherein the trip element 3 is the solenoid S.

This patent application claims the priority of the US patent application 10 2024 120 635.7, the disclosure content of which is hereby incorporated by reference.

### Reference signs

- 1: trip device
- 2: delay circuit
- 3: trip element
- 4: first output node
- 5: second output node
- 6: gate terminal
- 7: drain terminal
- 8: source terminal
- 9: delay output
- 10: circuit protection device
- 11: system

- D1..D4: diodes
- R1: resistor
- C1: capacitor
- R2: further resistor
- C2: further capacitor
- D5: Zener diode
- M1: semiconductor transistor
- R3: trip resistor
- S: solenoid

## Claims

1. Trip device (1) for a circuit protection device (10), comprising
- at least one trip element (3) configured to activate the circuit protection device (10), and
- a delay circuit (2) connected to the trip element (3), wherein
- the delay circuit (2) comprises electrical components configured to delay an input
- the electrical components comprise a resistor (R1) and a capacitor (C1) represented by a resistor-capacitor, RC, circuit,
- the RC circuit is connected to a second output node (5) of a bridge rectifier,
- a delay output (9) is located between the resistor (R1) and the capacitor (C1),
- the electrical components comprise a Zener diode (D5) and a semiconductor transistor (M1), connected in series to one another,
- the Zener diode (D5) is connected to the delay output (9), and
- the trip element (3) is arranged between the semiconductor transistor (M1) and the second output node (5) being a high side output of the bridge rectifier.

2. Trip device (1) according to claim 1, wherein
- the semiconductor transistor (M1) is connected to the trip element (3).

3. Trip device (1) according to claim 1 or 2, wherein
- the electrical components comprise a decoupling element for the semiconductor transistor (M1).

4. Trip device (1) according to claim 3, wherein
- the decoupling element is connected between the Zener diode (D5) and the semiconductor transistor (M1).

5. Trip device (1) according to one of claim 1, wherein
- the trip element (3) comprises a solenoid (S), or
- the trip element (3) comprises a trip resistor (R3).

6. System (11) comprising
- a trip device (1) according to one of claims 1 to 5, and
- a circuit protection device (10).

7. System (11) according to claim 6, wherein
- the circuit protection device (10) is a residual current device.

8. System (11) according to claim 6, wherein
- the circuit protection device (10) is a miniature circuit breaker.

9. Charging station comprising a system (11) according to one of claims 6 to 8.
